# EUROPEAN PATENT SPECIFICATION

(11) **EP 3 487 728 B1**
(45) Date of publication and mention of the grant of the patent: **26.02.2025**
(21) Application number: 17831747.5
(22) Date of filing: 19.07.2017
(51) Int. Cl.: B60R 1/04, B60R 1/08, G02F 1/153, G02F 1/1345, G02F 1/155, G02F 1/161

(54) **ELECTRICAL CONNECTIONS FOR ELECTRO-OPTIC ELEMENTS**
ELEKTRISCHE VERBINDUNGEN FÜR ELEKTROOPTISCHE ELEMENTE
CONNEXIONS ÉLECTRIQUES POUR ÉLÉMENTS ÉLECTRO-OPTIQUES

(30) Priority: 19.07.2016 US 201662363996 P
(43) Date of publication of application: 29.05.2019
(73) Proprietor: Gentex Corporation, Zeeland, MI 49464 (US)
(72) Inventor: STRAY, Joel A., Zeeland Michigan 49464 (US); TONAR, William L., Zeeland Michigan 49464 (US); CAMMENGA, David J., Zeeland Michigan 49464 (US)
(74) Representative: Müller-Boré & Partner Patentanwälte PartG mbB
(86) International application number: PCT/US2017/042739
(87) International publication number: WO 2018/017651

(56) References cited:
- US-A1- 2014 036 338
- US-A1- 2015 055 207
- US-A1- 2015 077 828
- US-A1- 2016 097 959
- US-B1- 6 193 379

## Description

### FIELD OF THE DISCLOSURE

The present disclosure generally relates to a rearview mirror assembly, and more particularly, electrical connections to an electro-optic element within the rearview mirror assembly.

### BACKGROUND OF THE DISCLOSURE

In many mirror products today, a precise and uniform fit between an edge of a glass shape and a surrounding flush mounted bezel or housing is desirable to produce an aesthetically pleasing product. A uniform, yet minimal, gap produces a smooth, pleasing, seamless transition between the bezel or housing and the mirror element. In some instances where the bezel is flush to the mirror, it may be difficult to provide electrical connections to electrical components. Processes that form a bezel incorporated with a mirror element may benefit from unique electrical pathways between mirror element and its electrical drive circuit.

US 2015/077828 A1 describes an anti-glare mirror, vehicle, and manufacturing method for the anti-glare mirror.

US 2014/036338 A1 describes an apparatus, method, and process that includes a substantially transparent substrate having a first surface, a second surface, and edge extending around at least a portion of a perimeter of the substantially transparent substrate, wherein the edge being a laser induced channel edge having enhanced edge characteristics.

US 6,193,379 B1 describes an electrochromic assembly including a transparent front element and a rear element each having front and rear surfaces. At least one of the front and rear elements is made from a plastic that maintains its integrity when exposed to organic solvents. A layer of transparent conductive material is disposed on the rear surface of the front element. A layer of conductive material is also disposed on the front surface of the rear element. The front element and the rear element when joined form a chamber therebetween. The chamber contains at least one electrochromic material in solution with the organic solvent, which is effective to attenuate light passing therethrough.

### SUMMARY OF THE PRESENT DISCLOSURE

The underlying technical problem is solved by a rearview device having the features disclosed in the independent claim. Specific embodiments are defined in the dependent claims.

Aspects, objects, and features of the present disclosure will be understood and appreciated by those skilled in the art upon studying the following specification, claims, and appended drawings. It will also be understood that features of each example disclosed herein may be used in conjunction with, or as a replacement for, features of the other examples.

### BRIEF DESCRIPTION OF THE DRAWINGS

In the drawings:
FIG. 1A is a front view of a rearview mirror assembly of the present disclosure;
FIG. 1B is a top perspective exploded view of the rearview mirror assembly of FIG. 1A;
FIG. 2A is an illustration of a cross-sectional view of the rearview mirror assembly according to one example taken at line II of FIG. 1A;
FIG. 2B is an illustration of a cross-sectional view of the rearview mirror assembly according to another comparative example taken at line II of FIG. 1A that may be useful in understanding the invention;
FIG. 2C is an illustration of a cross-sectional view of the rearview mirror assembly according to yet another comparative example taken at line II of FIG. 1A that may be useful in understanding the invention;
FIG. 2D is an illustration of a cross-sectional view of the rearview mirror assembly according to yet another comparative example taken at line II of FIG. 1A that may be useful in understanding the invention;
FIG. 2E is an illustration of a cross-sectional view of the rearview mirror assembly according to yet another comparative example taken at line II of FIG. 1A that may be useful in understanding the invention;
FIG. 2F is an illustration of a cross-sectional view of the rearview mirror assembly according to yet another comparative example taken at line II of FIG. 1A that may be useful in understanding the invention;
FIG. 2G is an illustration of a cross-sectional view of the rearview mirror assembly according to yet another comparative example taken at line II of FIG. 1A that may be useful in understanding the invention;
FIG. 2H is a perspective view of a side of the electro-optic element, according to yet another comparative example that may be useful in understanding the invention; and
FIG. 2I is an illustration of a cross-sectional view of the rearview mirror assembly according to yet another comparative example taken at line II-I of FIG. 2H that may be useful in understanding the invention.

### DETAILED DESCRIPTION

Additional features and advantages of the invention will be set forth in the detailed description which follows and will be apparent to those skilled in the art from the description or recognized by practicing the invention as described in the following description together with the claims and appended drawings.

As used herein, the term "and/or," when used in a list of two or more items, means that any one of the listed items can be employed by itself, or any combination of two or more of the listed items, can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

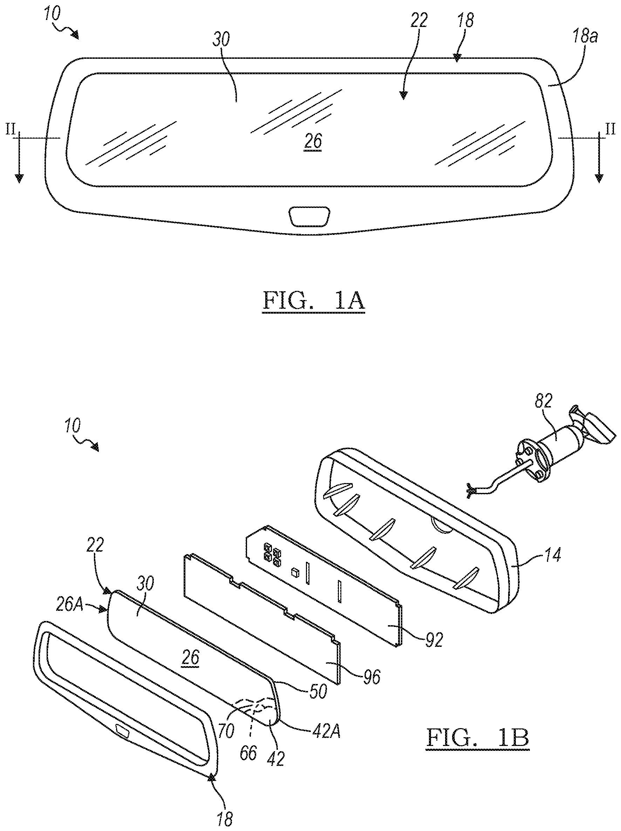

Referring now to FIGS. 1A-2B, reference numeral 10 generally designates a rearview device or rearview mirror assembly which includes a housing 14, a bezel 18 and an electro-optic element 22. The electro optic-element 22 includes a first substantially transparent substrate 26 defining a first surface 30 and a second surface 34. The second surface 34 includes a first electrically conductive layer 38. A second substrate 42 defines a third surface 46 and a fourth surface 50. The second substrate 42 also defines a hole 54 extending between the third surface 46 and the fourth surface 50. The third surface 46 includes a second electrically conductive layer 58. A primary seal 62 is disposed between the first and second substrates 26, 42. The primary seal 62 and the first and second substrates 26, 42 define a cavity 66 therebetween. A conductive bus 124 is positioned proximate the hole 54 of the second substrate 42. An electro-optic material 70 is disposed within the cavity 66.

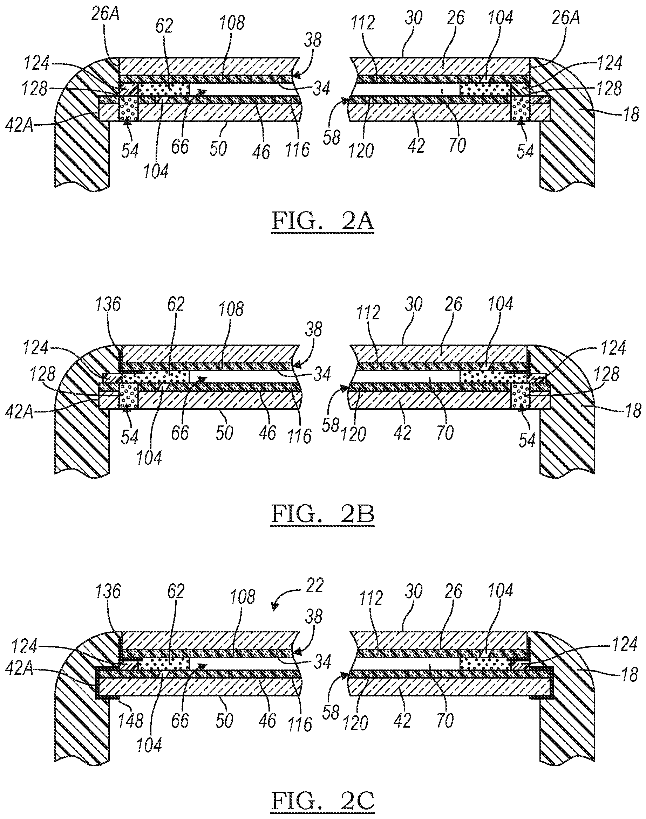

With reference now to the depicted example of FIGS. 1A and 1B, the illustrated rearview mirror assembly 10 can be an interior rearview assembly positioned within an interior of a vehicle. When the rearview mirror assembly 10 is an interior rearview assembly, the rearview mirror assembly 10 may be connected to a mount 82, which is adapted to be mounted inside the vehicle in a location proximate to or on a front windshield of the vehicle. It should be noted that the present disclosure is equally applicable to exterior mirrors, as well as other optical assemblies positioned within bezels and/or housings. The first substrate 26 may include a variety of transparent materials transparent in the visible region of the electromagnetic spectrum including soda-lime float glass, EAGLE^{®} glass, alkaline earth boro-aluminosilacate glass, GORILLA° glass, alkalialuminosilicate glass, chemically strengthened glass, insulated glass, tempered glass, sapphire, optical crystals, diamond, quartz, ceramics, polymers or plastics. The second substrate 42 may include the same materials as the first substrate 26, but does not need to be transparent and therefore may include polymers, metals, glass, ceramics, and/or composites. The bezel 18 may be formed of a thermosetting polymer (e.g., a reactive injection molding (RIM) suitable polymer, reinforced RIM suitable polymer, a structural RIM suitable polymer, a castable polymer and combinations thereof) and/or a thermoplastic polymer (e.g., polycarbonate, nylon, acrylic, combinations thereof, etc.). In some examples, the bezel 18 may include a clear polymeric material. The bezel 18 may be formed via machining, casting, resin transfer molding, reactive injection molding, injection molding, and/or compression injection molding. The first substrate 26 defines a first edge 26A and the second substrate 42 defines a second edge 42A. The first and second edges 26A, 42A extend circumferentially around the respective first and second substrates 26, 42. The first and second edges 26A, 42A are in direct contact with the bezel 18, as described in greater detail below. The first and second substrates 26, 42 may have a thickness between about 0.1 mm to about 3.0 mm, between about 0.5 mm to about 2.2 mm, or between about 0.8 mm to about 1.6 mm. In some examples, the thicknesses of the first and second substrates 26, 42 may differ from one another. Furthermore, a reflector material may be located on either the third surface 46 (FIG. 2A) or the fourth surface 50 of the second substrate 42, depending upon the type of electro-optic element 22.

The rearview mirror assembly 10 also includes a circuit board 92 and a carrier plate 96. The carrier plate 96 can be located behind the electro-optic element 22 and have the circuit board 92 connected thereto. If the rearview mirror assembly 10 is an interior rearview assembly, the carrier plate 96 is typically fixed in position within the housing 14. The carrier plate 96 of the rearview mirror assembly 10 can be used to maintain the position of the electro-optic element 22 and/or carry the circuit board 92. An example of an interior rearview assembly including a carrier plate and a circuit board is disclosed in U.S. Patent No. 6,239,899, entitled "MIRROR WITH INTERNAL SUPPORT PLATE," assigned to Gentex Corporation. In the rearview mirror assembly 10, the carrier plate 96 assists in maintaining the electro-optic element 22 in position within the housing 14. An example of the housing 14, bezel 18, carrier plate 96, circuit board 92 and their interconnections may be found in U.S. Patent Application Publication No. 2005/0152054 entitled "REFLECTIVE ELEMENT HOLDER FOR REARVIEW MIRROR," assigned to Gentex Corporation. However, it is contemplated that the rearview mirror assembly 10 may omit a bezel, circuit board and/or carrier plate from the rearview mirror assembly 10.

The illustrated electro-optic element 22 has the electro-optic material 70 positioned between the first substrate 26 and the second substrate 42. In some examples, the electro-optic material 70 may be an electrochromic material. In such examples, the electro-optic material 70 may be a solution phase as disclosed in U.S. Patent No. 4,902,108 entitled "SINGLE-COMPARTMENT, SELF-ERASING, SOLUTION-PHASE ELECTROCHROMIC DEVICES, SOLUTIONS FOR USE THEREIN, AND USES THEREOF" and U.S. Patent No. 5,278,693 entitled "TINTED SOLUTION-PHASE ELECTROCHROMIC MIRRORS," commonly assigned to Gentex Corporation. In other examples, the electro-optic material 70 may be in a solid-state. In addition, a hybrid system, where part of the electro-optic material 70 is solid-state and part is solution phase, is also contemplated. Solution-phase materials, because of their liquidic or flowable properties, do not rigidly bond the first and second substrates 26, 42 together like completely solid-state electro-optic material 70. The electro-optic material 70 may have a thickness between about 1 micron and about 1000 microns.

The flexibility of the electro-optic element 22 may be dependent on a variety of factors, including thickness of the first and second substrates 26, 42, type (e.g., solution-phase or solid-state) of electro-optic material 70, and overall thickness of the electro-optic element 22. For example, in examples of the rearview mirror assembly 10 having solid-state electro-optic material 70, the first and second substrates 26, 42 are bonded together in a manner that causes them to bend much like a piece having their total thickness. Contrastingly, electro-optic elements 22 having a solution-phase electro-optic material 70 bend in a complex manner wherein the first and second substrates 26, 42 bend simultaneously, but independently. Additionally, the solution phase electro-optic material 70 may ebb and flow somewhat in reaction to the stress. The net result is that the electro-optic element 22, in examples with solution phase electro-optic material 70, tends to be more flexible than electro-optic elements 22 with solid-state phase electro-optic material 70, even where the first and second substrates 26, 42 have the same thickness and other properties.

The first and second substrates 26, 42 may be cut to shape in a variety of processes. In one example, the first and second substrates 26, 42 are cut to shape with the use of a score and break technique. In another example, an abrasive wheel or a high pressure water jet may be used to cut the first and second substrates 26, 42. In yet another example, the first and second substrates 26, 42 may be cut using a laser. Examples of laser systems and laser cutting are described in U.S. Patent No. 8,842,358, entitled "APPARATUS, METHOD, AND PROCESS WITH LASER INDUCED CHANNEL EDGE" and U.S. Patent Application Publication No. 2014/0034616, entitled "LASER SYSTEM AND METHOD THEREOF," each of which is assigned to Gentex Corporation.

Traditionally, design of the bezel 18 or housing 14 around the electro-optic element 22 takes into account the differences in the coefficient of thermal expansion ("CTE") of the materials used in the electro-optic element 22, as well as the bezel 18 and housing 14. Polymeric materials typically have a greater CTE than glass, ceramic, or metal components. This means that as the temperature of the rearview mirror assembly 10 changes, the different materials of the rearview mirror assembly 10 expand and contract at different rates. The differential expansion of the components of the rearview mirror assembly 10 may result in the generation of stresses within the assembly 10 if not properly accounted for. In the case of automotive applications, typical temperature testing takes place in a range between about -40° C to about 105° C. Conventional bezels are made out of strong and fairly rigid engineering plastics such as polypropylene, Acrylonitrile butadiene styrene/Polycarbonate, Acrylonitrile Styrene Acrylate, and have thermal expansion coefficients that are much larger than glasses, ceramics, and metals. This expansion difference can create hoop stress as conventional bezels shrink around glass and metal elements at cold temperatures. As a result, conventional bezels may have ribs or large gaps to accommodate the different thermal size changes between bezels/housings and mirrors.

The bezel 18 may include a polymeric material having a low enough CTE such that temperature changes in the bezel 18 do not cause undue contraction of the bezel 18 around the electro-optic element 22 and result in stress formation. In various examples, the CTE of the polymeric material of the bezel 18 and the housing 14 may be less than about 70 ppm, less than about 60 ppm, less than about 50 ppm, less than about 40 ppm, less than about 30 ppm, less than about 25 ppm, and less than about 20 ppm. Exemplary low CTE polymers may include polyetherimides, filled polyetherimides, liquid crystal polymer, filled liquid crystal polymer, nylon, filled nylon, filled polycarbonate, filled acrylonitrile butadiene styrene, polyamide-imide, filled polyamide-imide, filled polyphenylene sulfide, high density polyethylene, polystyrene and other polymers having a CTE below about 50 ppm. It should be noted that the bezel 18 may include combinations of low CTE polymers as well as combinations of low CTE polymers with regular CTE polymers. Additionally, the bezel 18 may include one or more fillers configured to further reduce the CTE of the bezel 18. Exemplary filler materials may include glasses, metals, minerals, organic materials or ceramics which may lower the overall CTE of the polymer. The filler materials may be in the form of powders, flakes, and fibers. Exemplary fibers may include glass fibers and/or carbon fibers. The bezel 18 may have a volume fraction of filler material greater than about 10%, greater than about 20%, greater than about 30%, greater than about 40%, and greater than about 50%. In a specific example, the bezel 18 may include nylon with an approximately 30% by volume glass filler. In some examples, the bezel 18 may have different local compositions of polymer or filler material in order to locally minimize the CTE of the bezel 18. For example, corners or long portions at the top and bottom of the bezel 18 may include a different polymer or higher volume fraction of filler material than other portions of the bezel 18. It should be understood that in examples of the rearview mirror assembly 10 not including the bezel 18, the housing 14 may alternatively include the aforementioned materials described in connection with the bezel 18.

Referring now to FIGS. 2A-2I, depicted are various configurations of the first and second substrates 26, 42 which have been integrally molded with the bezel 18. Aesthetically, a gap between the bezel 18 and the first edge 26A of the first substrate 26 may appear unsightly by a viewer of the rearview mirror assembly 10. Accordingly, the bezel 18 may be integrally molded to the first and second substrates 26, 42 if the polymeric examples of the bezel 18 are filled with a sufficient loading of a CTE reducing filler (e.g., glass fiber or carbon fiber). In integrally molded examples, the bezel 18 may be laminated directly to the first and/or second substrates 26, 42 or the bezel 18 may be injection molded around the first and/or second substrates 26, 42 such that no gap exists or may be reduced to non-visible size (e.g., less than about 25 microns, less than about 15 microns, less than about 10 microns or less than about 5 microns). An exemplary method of laminating the bezel 18 to the first or second substrates 26, 42 may be accomplished via a method similar to SURFIC^{™} as developed by Asahi Glass Co. LTD of Chiyoda, Tokyo, Japan and/or glass insert molding performed by Yoshida Technoworks Co., Ltd. of Sumida-ku, Tokyo, Japan. Use of SURFIC^{™} or the other integrated molding techniques described above would reduce the gap size between the first and/or second substrate 26, 42 and the bezel 18 to near zero and produce an aesthetically pleasing rearview mirror assembly 10. From a structural perspective, contacting the bezel 18 with both the first and second substrates 26, 42 may provide a more robust and secure connection between the bezel 18 and the first and second substrates 26, 42. Various advantages may be achieved through such a design, such as ease of manufacturing (e.g., process and/or mold shutoffs) and enhanced adhesion between the substrates 26, 42 and the bezel 18 through an increase in surface area contact.

In some comparative examples that may be useful in understanding the invention, the second edge 42A is positioned inboard, or in an inward direction, relative to the bezel 18 of the first edge 26A. Such an example may be accomplished by using a smaller dimensioned second substrate 42 relative to the first substrate 26, or through positioning of the first and second substrates 26, 42. In accordance with the invention, the second edge 42A is positioned outboard, or in an outward direction relative to the first edge 26A. Such an example may be accomplished by using a smaller dimensioned first substrate 26 relative to the second substrate 42, or through positioning of the first and second substrates 26, 42. Exemplary advantages that may be achieved through such an example include a structural "lock" being formed due to the three dimensional aspect of the configuration (e.g., which may increase structural rigidity of the rearview assembly 10) and a reduced dimension bezel 18 (e.g., thinner, reduced and/or more compact) which may be aesthetically pleasing. In yet another comparative example that may be useful in understanding the invention, the second edge 42A is positioned substantially flush, or in substantial alignment, with the first edge 26A. The first and second 26A, 42A can be flat and at a 90 degree angle relative to the first and fourth surfaces 30, 50 or at an angle other than 90 degrees relative to surfaces 30, 50. The first and second edges 26A, 42A can also be shaped such as a semicircle or pencil edge or contoured such as with a step, slot or notch. The texture of the first and second edges 26A, 42A can be smooth or rough depending on the edge appearance that is desired.

To facilitate adhesion between the bezel 18 and the first and/or second substrates 26, 42, one or more adhesion promoters may be included in the material of the bezel 18, in a resin base coating pre-applied to the first and second substrates 26, 42 and/or applied directly to the first and/or second substrates 26, 42. Exemplary adhesion promoters include silane coupling agents such as Dow Corning^{®} Z-6121 and/or Dow Corning^{®} Xiameter OF S-6032 and/or solvent based organic solutions that may etch the substrates 26, 42 such as LORD Chemlok^{®} primers. It will be understood that although several examples are provided herein, other adhesion promoters, etchants or surface treatments and combinations of adhesion promoters and/or etchants or surface treatments may be used. The adhesion promoter used may be selected based at least in part on the material of the bezel 18 and the substrates 26, 42 in order to achieve a desired level of adhesion. The first and second edges 26A, 42A can also be coated with an elastomeric resin to help mitigate mechanical or thermal stresses that may develop in the rearview assembly 10.

Referring now to FIG. 2A, the first and second electrically conductive layers 38, 58 may each define an ablation area 104. The ablation area 104 of the first electrically conductive layer 38 splits the first electrically conductive layer 38 into a first portion 108 and a second portion 112. The ablation area 104 of the second electrically conductive layer 58 splits the second electrically conductive layer 58 into a third portion 116 and a fourth portion 120. Positioned on an outboard end of the primary seal 62 is the conductive bus 124. The conductive bus 124 may function as a shut off for the material of the bezel 18 when the bezel 18 is formed. The conductive bus 124 may include a metal laden epoxy (e.g., silver epoxy), a conductive metal, a conductive polymer, or combinations thereof. In various examples, the conductive bus 124 may have a resistance of less than about 1 ohm. In the depicted example, the conductive bus 124 is positioned inboard of the first edge 26A and is in electrical communication with the first electrically conductive layer 38. The second substrate 42 defines one or more holes 54 extending between the third and fourth surfaces 46, 50. In other words, the fourth surface 50 may define one or more holes 54. The holes 54 may be circular, square, rectangular (e.g., slot like), triangular or other shapes. The holes 54 may have a diameter, or longest cross-sectional dimension (e.g., diameter) of between about 0.1 mm and about 10 mm. The holes 54 may be formed using conventional mechanical processes (e.g., drilling with a bit) or may be formed through chemical etching or laser cutting. An example of a hole incorporated into an electro-optic element is disclosed in US Patent No 8,864,322 entitled "SHAPED REARVIEW ASSEMBLY," assigned to Gentex Corporation. One or more holes 54 may be positioned or formed proximate the second edge 42A of the second substrate 42. One or more holes 54 may be positioned or formed in an inboard location of the second substrate 42. For example, one or more of the holes 54 may be positioned from about 0.1 mm to about 10 cm inboard from the second edge 42A.

Disposed within the holes 54 may be a conductive filler 128. The filler 128 may include a metal tube (e.g., a via such as a multicore Copperset through hole plating system), conductive polymer, solder paste, a monolithic piece of metal, a thermal setting epoxy or combinations thereof. Any filler 128 may contain on its outer portion, an electrically insulating portion to isolate the electrical conductance from electrically conductive sections found on the third or fourth surfaces 46, 50. Optionally, a separate insulating member could be inserted into the hole 54 prior to the installation of the conductive filler. An insulator used in this method would be used to bring electrical conductance from the fourth surface 50 to the second surface 34. Further, any of the materials of the conductive bus 124 may be used as the filler 128 and any of the materials of the filler 128 may be used as the conductive bus 124. The filler 128 may be placed within the holes 54 at the time of assembling the electro-optic element 22 prior to formation of the bezel 18. The filler 128 may be flush with the third surface 46 or form a protruding connector. The filler 128 may be flush with the fourth surface 50 or form a protruding connector. In examples where the filler 128 is flush with the third and/or fourth surfaces 46, 50, the filler 128 may define a surface which is a distance of about 0.01 mm to about 0.2 mm from the third and/or fourth surfaces 46, 50. According to various examples, the filler 128 may define a surface (e.g., a filler surface) which is partially, substantially or completely parallel with the third and/or fourth surfaces 46, 50. According to various examples, the surface of the filler 128 is planar with the third and/or fourth surfaces 46, 50. The filler 128 may be partially or fully covered by the bezel 18. The filler material 128, depending on the example, may be held in place using an adhesive material (e.g., thermal or ultraviolet curing). The filler 128 is in electrical connection with the conductive bus 124 and the second electrically conductive layer 58 thereby providing electrical connection to both the first and second electrically conductive layers 38, 58. The filler 128 may cure with the conductive bus 124 to form a single continuous electrical connection. Use of the ablation areas 104 allows for the holes 54 to be in electrical connection with either the first and third portions 108, 116 or the second and fourth portions 112, 120 such that the electro-optic element 22 does not short out across the second electrically conductive layer 58. After lamination or formation of the bezel 18 to the electro-optic element 22, the circuit board 92 (FIG. 1B) may be electrically connected to the electro-optic element 22. In one example, a wire may make electrical contact with the filler 128 (e.g., inserted in the metal tube or soldered) to provide electrical connection. In other examples, the filler 128 may be omitted and the wire electrically connected with the conductive bus 124 and/or the second electrically conductive layer 58. In yet other examples, the wire may be placed in the hole 54 and the filler 128 used to conductively secure the connection.

Referring now to the comparative example of FIG. 2B that may be useful in understanding the invention, the conductive bus 124 may be positioned outboard of the first edge 26A. In such an example, the holes 54 may similarly positioned outboard of the first edge 26A and positioned below the conductive bus 124. In such an example, a conductive coating 136 may be disposed on the first edge 26A and wrap onto the second surface 34. The conductive coating 136 may include at least one of a conductive ink, a vacuum deposited metal, a transparent conductor (e.g., indium tin oxide), carbon (graphene and/or graphite), a conductive metal foil, a conductive tape, a sputtered metal and combinations thereof. The conductive coating 136 is in electrical communication with the conductive bus 124 and the first portion 108 of the first electrically conductive layer 38. Such an example may be advantageous in that the electrical connection of the conductive bus 124 may be made after the primary seal 62 has been formed and cured.

Referring now to the comparative example of FIG. 2C that may be useful in understanding the invention, disposed around the second edge 42A is a conductive member 148. The conductive member 148 may be in electrical communication with the first electrically conductive layer 38 and may be in physical contact with the bezel 18. The conductive member 148 may extend from the fourth surface 50, around the second edge 42A and extend onto the third surface 46 to make electrical contact with the second electrically conductive layer 58. The conductive member 148 may include at least one of a conductive ink, a conductive tape, a thermoplastic polymer, a thermosetting polymer (e.g., metal filled such as a silver epoxy), a flex circuit, a conductive metal foil, a conductive tape, a metal component (e.g., a "J-clip" or an "L-clip") and combinations thereof. In the depicted example, the electro-optic element 22 include the conductive bus 124, but may not without departing from the teachings provided herein. In examples not utilizing the conductive bus 124, the conductive member 148 may extend upwards to electrically and physically contact the conductive coating 136. Further, the conductive member 148 may be configured to elastically deflect in a spring-like manner such that sufficient electrical connection between the conductive member 148 and the conductive coating 136 is achieved. According to various examples, the conductive member 148 may function as a shut-off for the molding of the bezel 18. In such examples, the conductive member 148 may be formed of a "pre-preg" material which is solid at room temperature, but has not been cured yet. The pre-preg may be a solid resin and a solid curing agent which have been mixed to form a pliable mixture. Further, the pre-preg may be mixed with a conductive material to make the pre-preg electrically conductive. The pliable nature of the pre-preg may be useful in that the pre-preg may be wrapped from the fourth surface 50 to the third surface 46 at room temperature, and at elevated temperatures, the curing agent may activate to cure the pre-preg to form the conductive member 148. It will be understood that one or more components of the pre-preg may also be subject to melting without departing from the teachings provided herein. As depicted, the bezel 18 may substantially cover the conductive coating 136 and the conductive member 148.

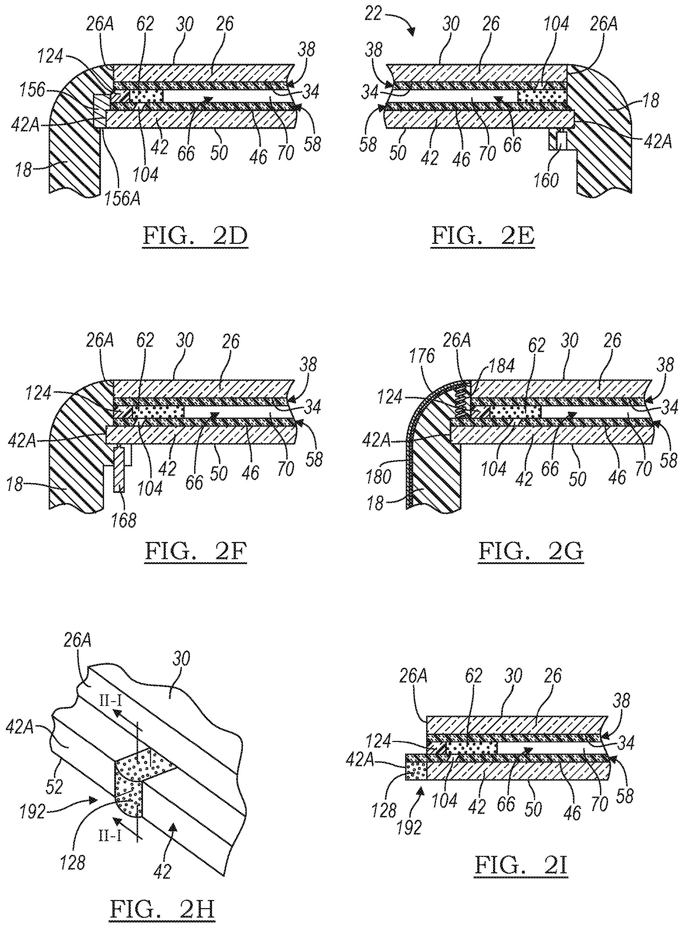

Referring now to the comparative example of FIG. 2D that may be useful in understanding the invention, a conductive insert 156 may be disposed in contact with the second edge 42A of the second substrate 42. The electrically conductive insert 156 may be in electrical communication with at least one of the third surface 46 of the second substrate 42 and the second surface 34 of the first substrate 26. The conductive insert 156 may function as a shut-off during lamination and or formation of the bezel 18 to the electro-optic element 22. The conductive insert 156 may be a metal, conductive polymer, conductive epoxy, flex circuit or other conductive material. The conductive insert 156 may extend onto the third surface 46 and be in electrical communication with the second electrically conductive layer 58. The insert 156 may define a contact surface 156A to which the circuit board 92 (FIG. 1B) or other electrical connection may be coupled. The contact surface 156A may be flush with the fourth surface 50 of the second substrate 42. The conductive insert 156 and contact surface 156A may be left partially exposed (i.e., partially covered) after formation or lamination of the bezel 18, or may be buried (i.e., fully covered) such that post processing (e.g., drilling through or removing a portion of the bezel 18) is used to expose the conductive surface 156A. It will be understood that a similar process may be employed for examples where the filler 128 is covered (substantially or partially) by the bezel 18. In a specific example, the insert 156 may be one or more electromagnetic or radio frequency interference shields. The shields may include one or more metal components. In an example, the shield may be utilized to replace the conductive bus 124 (FIG. 2A) connecting with one or more of the first and second electrically conductive layers 38, 58. Further, the shield may extend from the bezel 18 and provide an electrical connection contact point to power the electro-optic element 22.

Referring now to the comparative example of FIG. 2E that may be useful in understanding the invention, the bezel 18 may define an aperture 160. In such an example, the bezel 18 may extend onto the fourth surface 50 of the second substrate 42. The aperture 160 may be formed into the bezel 18 after formation of the bezel 18 (e.g., via mechanical drilling, laser ablation, etching, etc.) to expose an electrical contact point (e.g., the hole 54/filler 128 (FIG. 1), the conductive member 148 (FIG. 2C), other electrical contacts for the electro-optic element 22). It will be understood that the aperture 160 may be filled with a conductive material (e.g., the filler 128) or be left open to allow for electrical contact (e.g., through a wire).

Referring now to the comparative example of FIG. 2F that may be useful in understanding the invention, the bezel 18 may include a conductive component 168 positioned within the bezel 18. The conductive component 168 may be co-molded (e.g., inserted during molding/lamination and have the bezel 18 formed around it) with the bezel 18 or may be added in post processing (e.g., by drilling a hole and inserting the conductive component 168 or by heating the conductive component 168 and sinking it into the material of the bezel 18). The conductive component 168 may be metal, a conductive polymer, a wire or other electrically conductive material. The conductive component 168 may be in electrical communication with a contact point on the electro-optic element 22 (e.g., the hole 54/filler 128 (FIG. 1), the conductive member 148 (FIG. 2C), other electrical contacts for the electro-optic element 22) to power the electro-optic element 22.

Referring now to FIG. 2G as a comparative example that may be useful in understanding the invention, the bezel 18 may include a decorative film 176. The decorative film 176 may be laid down in a mold prior to the formation of the bezel 18 such that the decorative film 176 is on an A-surface, or exterior of the bezel 18. The decorative film 176 may be used to enhance the appearance of the bezel 18 by providing a smooth surface and/or one or more decorations (e.g., metallized layer, pattern, etc.). Positioned on a B-surface of the decorative film 176 (e.g., within the bezel 18) may be a flex circuit 180 and an electrical connector 184. It will be understood that the flex circuit 180 may additionally or alternatively be a metal foil, conductive coating, conductive polymer configured to transmit electricity and/or combinations thereof. The electrical connector 184 is configured to make electrical connection between the second electrically conductive layer 58 and the flex circuit 180. In the depicted example, the electrical connector 184 is a spring, but may be any other electrically conductive component capable of elastic deformation. As the electro-optic element 22 is placed in the mold with the decorative film 176, the elastic deformation of the electrical connector 184 ensures a secure connection with the second electrically conductive layer 58. Electrical connection between the electrical connector 184 and the flex circuit 180 allows for electrical communication with the electro-optic element 22 through the flex circuit 180. It will be understood that the flex circuit 180 may be combined with, or replaced by, the decorative film 176 without departing from the teachings provided herein.

Referring now to FIGS. 2H and 2I as comparative examples that may be useful in understanding the invention, the second substrate 42 may define a notch 192 extending between the fourth surface 50 and the third surface 46. The notch 192, unlike the hole 54, is not completely surrounded by the second substrate 42. The notch 192 may be filled with the same filler 128 as the hole 54. The filler 128 may be in contact with the second electrically conductive layer 58 and form an electrical contact point proximate the fourth surface 50. The filler 128 may be flush with the third and fourth surfaces 46, 50. During molding or lamination of the bezel 18 to the electro-optic element 22, the notch 192 may be filled with a portion of the mold to prevent the polymer of the bezel 18 from flowing into the notch 192. In another example, the notch 192 may be prefilled with the filler 128 such that the filler 128 functions as a shut-off and the notch 192 is not filled with the polymeric material of the bezel 18 (FIGS. 2A-2C).

It will be understood that although multiple separate examples have been described herein, combination of the examples are contemplated. For example, the holes 54 may be used with examples utilizing the notch 192, the conductive coating and member 136, 148, the conductive insert 156, the aperture 160, the conductive component 168 and the decorative film 176 without departing from the teachings provided herein. Similarly, any of the examples provided may be utilized with any other example provided.

According to various examples provided herein, the fourth surface 50 of the second substrate 42 may be substantially flush or flat (i.e., the filler 128, conductive bus 124, conductive coating 136, conductive member 148, conductive insert 156, flex circuit 180, and/or electrical connector 184 may be substantially flush or not extend onto the fourth surface 50). Such a flush example of the fourth surface 50 may be useful during the formation of the bezel 18. For example, in injection molded examples of the bezel 18, the fourth surface 50 may function as a surface for a mold of an injection molding machine to press against during formation of the bezel 18. Specifically, the pressure may be provided proximate the primary seal 62. In examples where the fourth surface 50 includes electrical contacts is otherwise is not flush, the molding equipment used to form the bezel 18 may apply unequal pressure which can result in damage to the electro-optic element 22. In such examples, the mold may need to be precisely machined to account for this variation such that uniform pressure may be applied. Accordingly, by creating a flush fourth surface 50 as disclosed herein, the bezel 50 may be formed in a cost effective manner.

Use of the present disclosure offers several advantages. First, the use of the present disclosure permits the formation of rearview mirror assemblies 10, and other structures having bezels 18, to include electrical components with low visibility electrical contacts. Second, use of the present disclosure allows for the formation of rearview mirror assemblies 10 which have a low profile and aesthetically pleasing design. Third, use of the present disclosure may allow for the reduction in the width of a concealment structure (e.g., a spectral filter, chrome ring, etc.) used to conceal the conductive bus 124, primary seal or other unsightly components located at edges of the electro-optic element 22. For example, by burying the electrical contacts (e.g., the conductive bus 124, conductive coating 136, conductive member 148, conductive insert 156, flex circuit 180, and/or electrical connector 184) within the bezel 18, the concealment structures may not need to be as wide. Thinner concealment structures may be advantageous in reducing the time and money required to manufacture them. Fourth, by positioning the electrical contacts within the bezel 18 and/or within the second substrate 42, the fourth surface 50 may be made flush (i.e., flat or substantially without changes in height). A flush fourth surface 50 may allow for uniform back pressure to be applied to the electro-optic element 22 during formation of the bezel 18. Further, a flush fourth surface 50 may allow for a more uniform formation of the bezel 18 onto the fourth surface 50.

It will be understood by one having ordinary skill in the art that construction of the described disclosure, and other components, is not limited to any specific material. Other exemplary embodiments of the disclosure disclosed herein may be formed from a wide variety of materials, unless described otherwise herein.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature, or may be removable or releasable in nature, unless otherwise stated.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.). For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, and the nature or numeral of adjustment positions provided between the elements may be varied. It should be noted that the elements and/or assemblies of the system may be constructed from any of a wide variety of materials that provide sufficient strength or durability, in any of a wide variety of colors, textures, and combinations. Other substitutions, modifications, changes, and omissions may be made in the design, operating conditions, and arrangement of the desired and other exemplary embodiments.

It will be understood that any described processes, or steps within described processes, may be combined with other disclosed processes or steps to form structures. The exemplary structures and processes disclosed herein are for illustrative purposes and are not to be construed as limiting.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

## Claims

1. A rearview device (10), comprising:
a bezel (18); and
an electro-optic element (22), comprising:
a first substantially transparent substrate (26) defining first and second surfaces (30, 34) and a first edge (26A) extending around at least a portion of a perimeter of the first substantially transparent substrate (26), wherein the second surface (34) comprises a first electrically conductive layer (38);
a second substrate (42) defining third and fourth surfaces (46, 50) and a second edge (42A) extending around at least a portion of a perimeter of the second substrate (42), the second substrate (42) defining a hole (54) between the third and fourth surfaces (46, 50), wherein the third surface (46) comprises a second electrically conductive layer (58);
a primary seal (62) disposed between the first and second substrates (26, 42), wherein the seal (62) and the first and second substrates (26, 42) define a cavity (66) therebetween;
an electro-optic material (70) disposed within the cavity (66); and
a conductive bus (124) positioned proximate the hole (54) of the second substrate (42);
wherein the bezel (18) extends onto the third and fourth surfaces (46, 50) of the second substrate (42), wherein the first and second edges (26A, 42A) are in direct contact with the bezel (18) and the second edge (42A) is positioned outboard of the first edge (26A) to form a structural lock of the electro-optic element (22) within the bezel (18).

2. The rearview device (10) of claim 1, further comprising a conductive filler (128) disposed within the hole (54).

3. The rearview device (10) of claim 2, wherein the filler (128) defines a filler surface which is substantially planar with the fourth surface (50).

4. The rearview device (10) of claim 2 or 3, wherein the conductive filler (128) comprises at least one of a metal tube, a conductive polymer, a solder paste and a monolithic piece of metal.

5. The rearview device (10) of any one of claims 2 to 4, wherein the conductive filler (128) is in electrical communication with the second electrically conductive layer (58).

6. The rearview device (10) of any of one of the preceding claims, wherein the hole (54) has a cross-sectional diameter of from about 0.1 mm to about 10 mm.

7. The rearview device (10) of any one of claims 2 to 6, wherein the filler (128) is substantially covered by the bezel (18).

8. The rearview device (10) of any one of claims 2 to 7, further comprising:
an insert (156) disposed within the bezel (18) and in electrical communication with the filler (128).

9. The rearview device (10) of any one of claims 1 to 8, wherein the bezel (18) defines an aperture (160) proximate the hole (54) of the second substrate (42), and wherein the aperture (160) is preferably filled with a conductive component (168).

10. The rearview device (10) of any one of the preceding claims, wherein a surface of the conductive filler (128) is substantially parallel with the fourth surface (50).

11. The rearview device (10) of any one of the preceding claims, wherein a distance between a surface of the conductive filler (128) and the fourth surface (50) is from about 0.01 mm to about 0.2 mm.

## Patentansprüche

1. Eine Rückansichtsvorrichtung (10), die Folgendes umfasst:
eine Einfassung (18); und
ein elektrooptisches Element (22), umfassend:
ein erstes im Wesentlichen transparentes Substrat (26), das eine erste und eine zweite Oberfläche (30, 34) und eine erste Kante (26A) definiert, die sich um mindestens einen Teil eines Umfangs des ersten im Wesentlichen transparenten Substrats (26) erstreckt, wobei die zweite Oberfläche (34) eine erste elektrisch leitende Schicht (38) umfasst;
ein zweites Substrat (42), das eine dritte und eine vierte Oberfläche (46, 50) definiert, und eine zweite Kante (42A), die sich um mindestens einen Teil eines Umfangs des zweiten Substrats (42) erstreckt, wobei das zweite Substrat (42) ein Loch (54) zwischen der dritten und der vierten Oberfläche (46, 50) definiert, wobei die dritte Oberfläche (46) eine zweite elektrisch leitende Schicht (58) umfasst;
eine Primärdichtung (62), die zwischen dem ersten und dem zweiten Substrat (26, 42) angeordnet ist, wobei die Dichtung (62) und das erste und das zweite Substrat (26, 42) zwischen sich einen Hohlraum (66) definieren;
ein elektrooptisches Material (70), das im Hohlraum (66) angeordnet ist; und
eine leitende Sammelschiene (124), die in der Nähe des Lochs (54) des zweiten Substrats (42) positioniert ist;
wobei sich die Einfassung (18) auf die dritte und vierte Oberfläche (46, 50) des zweiten Substrats (42) erstreckt, wobei die erste und zweite Kante (26A, 42A) in direktem Kontakt mit der Einfassung (18) stehen, und die zweite Kante (42A) außerhalb der ersten Kante (26A) positioniert ist, um eine strukturelle Verriegelung des elektrooptischen Elements (22) in der Einfassung (18) zu bilden.

2. Die Rückansichtsvorrichtung (10) nach Anspruch 1, die ferner einen leitfähigen Füllstoff (128) umfasst, der im Loch (54) angeordnet ist.

3. Die Rückansichtsvorrichtung (10) nach Anspruch 2, wobei der Füllstoff (128) eine Füllstoffoberfläche definiert, die im Wesentlichen planar zur vierten Oberfläche (50) ist.

4. Die Rückansichtsvorrichtung (10) nach Anspruch 2 oder 3, wobei der leitfähige Füllstoff (128) mindestens eines von einem Metallrohr, einem leitfähigen Polymer, einer Lötpaste und einem monolithischen Metallstück umfasst.

5. Die Rückansichtsvorrichtung (10) nach irgendeinem der Ansprüche von 2 bis 4, wobei der leitfähige Füllstoff (128) in elektrischer Verbindung mit der zweiten elektrisch leitfähigen Schicht (58) steht.

6. Die Rückansichtsvorrichtung (10) nach irgendeinem der vorstehenden Ansprüche, wobei das Loch (54) einen Querschnittsdurchmesser von etwa 0,1 mm bis etwa 10 mm aufweist.

7. Die Rückansichtsvorrichtung (10) nach irgendeinem der Ansprüche von 2 bis 6, wobei der Füllstoff (128) im Wesentlichen von der Einfassung (18) bedeckt ist.

8. Die Rückansichtsvorrichtung (10) nach irgendeinem der Ansprüche von 2 bis 7, die ferner Folgendes umfasst:
einen Einsatz (156), der in der Einfassung (18) angeordnet ist und in elektrischer Verbindung mit dem Füllstoff (128) steht.

9. Die Rückansichtsvorrichtung (10) nach irgendeinem der Ansprüche von 1 bis 8, wobei die Einfassung (18) eine Öffnung (160) in der Nähe des Lochs (54) des zweiten Substrats (42) definiert, und wobei die Öffnung (160) vorzugsweise mit einer leitfähigen Komponente (168) gefüllt ist.

10. Die Rückansichtsvorrichtung (10) nach irgendeinem der vorstehenden Ansprüche, wobei eine Oberfläche des leitfähigen Füllstoffs (128) im Wesentlichen parallel zur vierten Oberfläche (50) ist.

11. Die Rückansichtsvorrichtung (10) nach irgendeinem der vorstehenden Ansprüche, wobei ein Abstand zwischen einer Oberfläche des leitfähigen Füllstoffs (128) und der vierten Oberfläche (50) etwa 0,01 mm bis etwa 0,2 mm beträgt.

## Revendications

1. Un dispositif rétroviseur (10), comprenant :
une lunette (18) ; et
un élément électro-optique (22), comprenant :
un premier substrat essentiellement transparent (26) définissant des surfaces première et deuxième (30, 34) et un premier bord (26A) s'étendant autour d'au moins une partie d'un périmètre du premier substrat essentiellement transparent (26), sachant que la deuxième surface (34) comprend une première couche électriquement conductrice (38) ;
un deuxième substrat (42) définissant des surfaces troisième et quatrième (46, 50) et un deuxième bord (42A) s'étendant autour d'au moins une partie d'un périmètre du deuxième substrat (42), le deuxième substrat (42) définissant un trou (54) entre les surfaces troisième et quatrième (46, 50), sachant que la troisième surface (46) comprend une deuxième couche électriquement conductrice (58) ;
un joint primaire (62) disposé entre le premier et le deuxième substrat (26, 42), sachant que le joint (62) et le premier et le deuxième substrat (26, 42) définissent une cavité (66) entre eux ;
un matériau électro-optique (70) agencé dans la cavité (66) ; et
un bus conducteur (124) positionné à proximité du trou (54) du deuxième substrat (42) :
sachant que la lunette (18) s'étend sur les surfaces troisième et quatrième (46, 50) du deuxième substrat (42), sachant que les bords premier et deuxième (26A, 42A) sont en contact direct avec la lunette (18) et que le deuxième bord (42A) est positionné à l'extérieur du premier bord (26A) pour former un verrouillage structurel de l'élément électro-optique (22) à l'intérieur de la lunette (18).

2. Le dispositif rétroviseur (10) d'après la revendication 1, comprenant en outre un matériau de remplissage ou encore une charge conductrice (*conductive filler*) (128) disposée à l'intérieur du trou (54).

3. Le dispositif rétroviseur (10) d'après la revendication 2, sachant que la charge (128) définit une surface de charge qui est essentiellement plane avec la quatrième surface (50).

4. Le dispositif rétroviseur (10) d'après la revendication 2 ou 3, sachant que la charge conductrice (128) comprend au moins l'un parmi un tube métallique, un polymère conducteur, une pâte à souder et une pièce métallique monolithique.

5. Le dispositif rétroviseur (10) d'après l'une quelconque des revendications de 2 à 4, sachant que la charge conductrice (128) est en communication électrique avec la deuxième couche électriquement conductrice (58).

6. Le dispositif rétroviseur (10) d'après l'une quelconque des revendications précédentes, sachant que le trou (54) présente un diamètre de section transversale compris entre environ 0,1 mm et environ 10 mm.

7. Le dispositif rétroviseur (10) d'après l'une quelconque des revendications de 2 à 6, sachant que la charge (128) est essentiellement recouverte par la lunette (18).

8. Le dispositif rétroviseur (10) d'après l'une quelconque des revendications de 2 à 7, comprenant en outre :
un insert (156) agencé à l'intérieur de la lunette (18) et en communication électrique avec la charge (128).

9. Le dispositif rétroviseur (10) d'après l'une quelconque des revendications de 1 à 8, sachant que la lunette (18) définit une ouverture (160) à proximité du trou (54) du deuxième substrat (42), et sachant que l'ouverture (160) est de préférence remplie d'un composant conducteur (168).

10. Le dispositif rétroviseur (10) d'après l'une quelconque des revendications précédentes, sachant qu'une surface de la charge conductrice (128) est essentiellement parallèle à la quatrième surface (50).

11. Le dispositif rétroviseur (10) d'après l'une quelconque des revendications précédentes, sachant qu'une distance entre une surface de la charge conductrice (128) et la quatrième surface (50) est comprise entre environ 0,01 mm et environ 0,2 mm.
